# EUROPEAN PATENT APPLICATION

(11) **EP 2 818 837 A1**
(43) Date of publication of application: **31.12.2014**
(21) Application number: 14173667.8
(22) Date of filing: 24.06.2014
(51) Int. Cl.: G01J 3/50, G01J 3/02

(54) **Contactless dental device for determining tooth colors**

(30) Priority: 24.06.2013 DE 102013106554
(71) Applicant: Qioptiq Photonics GmbH & Co. KG, 37081 Göttingen (DE)
(72) Inventor: Rauscher, Helmut, 83627 Warngau (DE)
(74) Representative: Wablat, Wolfgang

(57) **Abstract**

A contactless dental device 2 for determining tooth colors includes illuminating means for illuminating with ambient illumination light a tooth 6 to be examined. At least one color sensor 8 for acquisition and spectral examination of light reflected by the tooth 6 is inventively provided, wherein filtering means 16 are associated with the color sensor for at least partial separation of a signal component originating from the illumination light from the signal component originating from the ambient light. Evaluating means 18 for determining the tooth color based on the signal component originating from the illumination light are disposed downstream of the filtering means 16.

## Description

### FIELD OF THE INVENTION

The invention relates to a contactless dental device for determining tooth colors.

### BACKGROUND OF THE INVENTION

Devices for determining tooth colors are generally known, for example from WO 02/086431, EP 1 307 716 B1, WO 00/63661, JP 01052450 A, JP 01052451 A, JP 01052452 A, JP 01052453 A, JP 01052454 A, JP 01052455 A, US 6,210,159 B1, US 6,206,669 B1, US 6,132,210, US 5,961,324, US 5,766,006 B1 and EP 2 133 820 A2.

The functioning of the known devices is such that the respective tooth color is determined by optical means at one point or a plurality of points of a tooth to be examined, and based on tooth color samples the dental materials are chosen in subsequent dental treatment, such that the treated tooth has a desired color which corresponds to the original tooth and/or matches the surroundings in the jaw of the patient in terms of color.

It has proven to be disadvantageous that the color temperature of the ambient light significantly influences the result of the tooth color determination. The result is thus, for example, dependent on whether the determining of the tooth color is effected in daylight, or in artificial light, or mixed light.

In conclusion it is to be noted that based on experience approximately 15% of all respective treatments lead to a tooth color of the treated tooth which does not correspond to the requirements or wishes of the patient. Follow-up treatments can thus be required which are time-consuming and costly both for the treating dentist and for the patients, and furthermore are uncomfortable for the patients.

In order to exclude or reduce influences of the ambient light on the result of the tooth color determination, it is known, for example from DE 10 2009 023 052 A1, to provide a sleeve or similar on the dental device used for determining the tooth color, which sleeve or similar is placed on the tooth to be examined and masks out the ambient light as much as possible.

For hygienic reasons the sleeve is a disposable item which must be disposed of after use, which results in costs and is a burden on the environment. Secondly, the handling of a corresponding dental device is difficult for the treating dentist and uncomfortable for the patients.

### SUMMARY OF THE INVENTION

Embodiments of the present invention provide a contactless dental device. Briefly described, the present invention is directed to a contactless dental device for determining tooth colors. The device includes illuminating means for illuminating a tooth to be examined using illumination light in ambient light, at least one color sensor for acquisition and spectral examination of the light reflected from the tooth, wherein filtering means for at least a partial separation of a signal component originating from the illumination light from a signal component originating from the ambient light are associated with the color sensor, and evaluation means, disposed downstream from the filtering means, for determining the tooth color based on the signal component originating from the illumination light.

Various embodiments of the present dental device are described in dependent claims 2-8 appended below.

Another aspect of the invention relates to a contactless method for determining tooth colors. According to this methodology a tooth to be examined is illuminated by illumination light in ambient light, wherein light reflected from the tooth is captured and spectrally examined using a color sensor, wherein filtering means are associated with the sensor, by which a signal component originating from the illumination light is at least partially separated from a signal component originating from the ambient light. The tooth color is determined in the evaluating means disposed downstream of the filtering means based on the signal component originating from the illumination light.

Various embodiments of the contactless method for determining tooth colors are described in dependent claims 10-15 appended below.

Other systems, methods and features of the present invention will be or become apparent to one having ordinary skill in the art upon examining the following drawings and detailed description. It is intended that all such additional systems, methods, and features be included in this description, be within the scope of the present invention and protected by the accompanying claims.

### BRIEF DESCRIPTION OF THE DRAWINGS

The invention is described in more detail below using an exemplary embodiment with reference to the accompanying highly schematic drawings. Here all features described, illustrated in the drawings, and claimed in the patent claims, taken alone and in any suitable combination with one another, form the subject of the invention, independent of their combination in the patent claims and their references as well as independent of the description or illustration in the drawings. It shows:
Figure 1 shows a first exemplary embodiment of an inventive dental device in a highly schematic, block-diagram-type illustration,
Figure 2 shows a second exemplary embodiment of an inventive dental device in the same manner of illustration as Figure 1, and
Figure 3 shows a schematic illustration for clarification of the arrangement of a field of measurement of a color sensor of the exemplary embodiments according to Figure 1 and Figure 2 relative to the field of view of a camera.

### DETAILED DESCRIPTION

Reference will now be made in detail to embodiments of the present invention, examples of which are illustrated in the accompanying drawings. Wherever possible, the same reference numbers are used in the drawings and the description to refer to the same or like parts.

The object of the invention is to provide a dental device for determining tooth colors which is improved with respect to its use.

The invention disengages from the idea of performing the determination of tooth colors using a dental device that contacts the tooth. Rather, it is based on the idea of performing the determination of tooth colors in a contactless manner, i.e. without tooth contact. Proceeding therefrom, the invention is based on the idea of performing the tooth color determination in ambient light and excluding or at least reducing the influences of the ambient light using suitable filtering techniques.

The invention accordingly provides illuminating means for illuminating a tooth to be examined using ambient illumination light, wherein at least one color sensor is provided for capturing and spectral examination of the light reflected from the tooth and wherein inventive filtering means are associated with the color sensor for at least partial separation of a signal component originating from the illumination light of a signal component originating from the ambient light.

Since the tooth-color determination is thus inventively carried out using a contactless dental device, the handling of the dental device is designed to be more comfortable and less complicated, both for the treating dentist and for the patients. Due to the contactless functioning, from a hygienic viewpoint it is unnecessary to exchange a component of the dental device after each tooth-color determination, as is necessary with respect to the used sleeve with dental devices based on the prior art. This saves cost and reduces impact on the environment.

The separating of signal components which originate from the illumination light, and thus represent a useful signal with respect to the tooth-color determination, from signal components which originate from the ambient light and thus represent an interfering signal, can be effected in any suitable manner. It is thus, for example, inventively possible to choose a spectral range for the illumination light which falls outside the spectral range of the ambient light. In this embodiment the sensitivity of the color sensor is then matched to the spectral composition of the illumination light. In other words in such an embodiment the color sensor is designed with respect to its spectral sensitivity such that it is relatively sensitive to the signal components originating from the illumination light, i.e. the useful signal, and is insensitive to the signal components originating from the ambient light, or only sensitive to the signal components originating from the ambient light to a degree that the result of the tooth-color determination is not influenced to an appreciable degree.

Another possibility for the filtering consists of capturing both the useful signal and the interfering signal using the color sensor and carrying out a separating of useful- and interfering - signal only disposed downstream from the color sensor using suitable signal processing means.

In this context an extremely advantageous further development of the invention provides that the illumination means are constructed and arranged for the emitting of modulated illumination light. Due to the modulation of the illuminated light and thus of the useful signal, it is possible using signal processing to separate the useful signal from the interfering signal in a relatively simple manner.

With the above-mentioned embodiment the modulation of the illumination light can be effected following any suitable modulation method, wherein "modulation method" is also understood in the sense of the invention to mean multiplex method. Thus, for example, it is inventively possible to subject the illumination light to a spreading code in the manner of a CDMA method, which is decoded downstream of the color sensor.

In this respect a particularly advantageous further development of the embodiment having the modulated illumination light provides that the illumination light is amplitude-modulated. An advantage of this embodiment consists in that it requires only a relatively low equipment expenditure with respect to both the modulation and the signal processing downstream of the color sensor. The illuminating means can be designed in any suitable manner. This applies both to the design of the equipment and to the spectral composition of the illumination light. Thus the illumination light can be chosen, for example, as broadband light, wherein white light in particular can be used. However, it is also inventively possible to provide a limited spectral region for the illumination light, for example also in the form of a spectral line or a plurality of spectral lines. The sensitivity of the color sensor is inventively determined by the spectral separation of the illumination light.

With respect to the equipment design, an advantageous further development of the invention provides that the illumination means have at least one preferably white LED. LEDs are available as relatively simple and economical light sources which have a high light output and service life as well as a relatively low power consumption.

The color sensor of the inventive dental device can be inventively constructed in any suitable manner. In this way any devices can be used which are sensitive to the spectral distribution of the illumination light. Thus, for example, a spectrometer can inventively be used as color sensor. In order to simplify the construction of and more cost-effectively design the inventive dental device, an extraordinarily advantageous further development of the invention provides that the color sensor is a semiconductor color sensor. Semiconductor color sensors are available as relatively simple and cost-effective standard components. In the simplest case the semiconductor color sensor can be formed as an RGB sensor which has three photodiodes, of which a color filter for the colors red, green, and blue is respectively provided. In order to increase the spectral sensitivity of the semiconductor color sensor, a higher number of photodiodes can also be used, wherein in the context of the determining of tooth colors a use, for example, of six photodiodes is sufficient.

Another advantageous further development of the invention provides that the filtering means are disposed downstream of the color sensor. In this embodiment the separation of the useful signal (of the signal components originating from the illumination light) from the interfering signal (of the signal components originating from the ambient light) is thus downstream from the color sensor.

An advantageous further development of the embodiment having amplitude modulated illumination light provides that the filtering means have a high-pass whose frequency is chosen so as to allow signal components originating from the modulated illumination light to be transmitted. Appropriate high-passes can be realized in a relatively simple manner, so that in this respect the equipment expense of the inventive dental device is kept low.

Another advantageous further development of the invention provides that the device has a camera for capturing a color picture of the tooth, wherein the illumination device is adjusted or adjustable relative to the camera such that a measuring point captured by the color sensor falls within the field of view of the camera. This embodiment makes it possible in particular to take a color picture of the tooth in or around the region of the illumination point of the tooth simultaneous with the tooth-color determination. The color picture can then be evaluated either separately from the tooth-color determination or in the context of the same.

An extraordinarily advantageous further development of the above-mentioned embodiment provides that the camera is in signal-transmission-connection to the evaluating means for transmission of a color picture of the tooth to the evaluating means, which determine a surface color gradient of the tooth based on the output signal of the color sensor as a color reference for the measuring point and based on the surface color gradient in the color picture. In this embodiment the color determined as the reference point for the measuring point serves as the color reference, which - in the context of calibrating the color sensor - represents an absolute color reference. Starting from this absolute color reference, relative color values can be inventively determined based on the color picture captured by the camera for points of the tooth spaced from the measurement point, so that a surface color gradient of the tooth can be determined in the result. In this way separate measurements at different points of the tooth are made unnecessary. With this embodiment the surface color gradient of the tooth is not determined from the color picture, but rather as a relative color gradient with respect to the (absolute) color reference at the measurement point. In this way the result of the tooth-color determination is not influenced, for example, by an incorrect or non-matching white balance of the camera. In other words, with this embodiment the measurement data of the color sensor serve as calibration data for the camera, so that in this way exact color values are also determined outside the measurement point.

With the above-mentioned exemplary embodiment, directing light to the camera can be effected in any suitable manner; in this respect a relatively simple embodiment thus able to be manufactured in a cost-effective manner provides that a beam splitter is disposed in the path of the beam in front of the camera for directing light on the camera.

The characteristics and advantages with respect to the inventive method described herein and its further developments result in an analogous manner to those that have been described with respect to the inventive dental device and its further developments.

The inventive dental device is not only usable in the field of dentistry, but also in other medical fields. In addition, the inventive dental device is also usable in industrial applications outside the field of medicine. The inventive use provides the use of a contactless inventive dental device in an industrial application for color determination. "Industrial application" is inventively understood to mean all applications which fall outside the medical field. By way of example and in particular, the inventive use can concern the inspection of painted surfaces, the calibration of color displays, and color mixing. Diverse further applications are inventively possible.

It can in principle be inventively sufficient - in the context of the desired measuring accuracy - to pre-specify a certain value for the distance of the dental device to the tooth to be examined, which value the operator of the dental device complies with as accurately as possible during the tooth-color determination and which value is considered during the evaluation. In order to increase the measuring accuracy, a distance-measuring device can also be integrated into the inventive dental device. In this way the measuring accuracy is increased.

In order to further increase the measuring accuracy, a 3D measuring device for 3D measurement of the tooth or its surroundings in the jaw of its patient can also be provided in the inventive dental device. In this manner the measuring accuracy is further increased, since it can be considered that the tooth position and curvature can have an influence on the measurement result.

The choice of suitable materials using the measurement result of the tooth-color determination based on tooth color samples is generally known to the person of skill in the art and is thus not described in further detail here.

If necessary according to the respective requirements, illumination optics can be associated with the illumination means of the inventive dental device in order to shape the beam of the illumination light in the desired manner.

Any suitable observation optics can also be inventively associated with the color sensor or the camera.

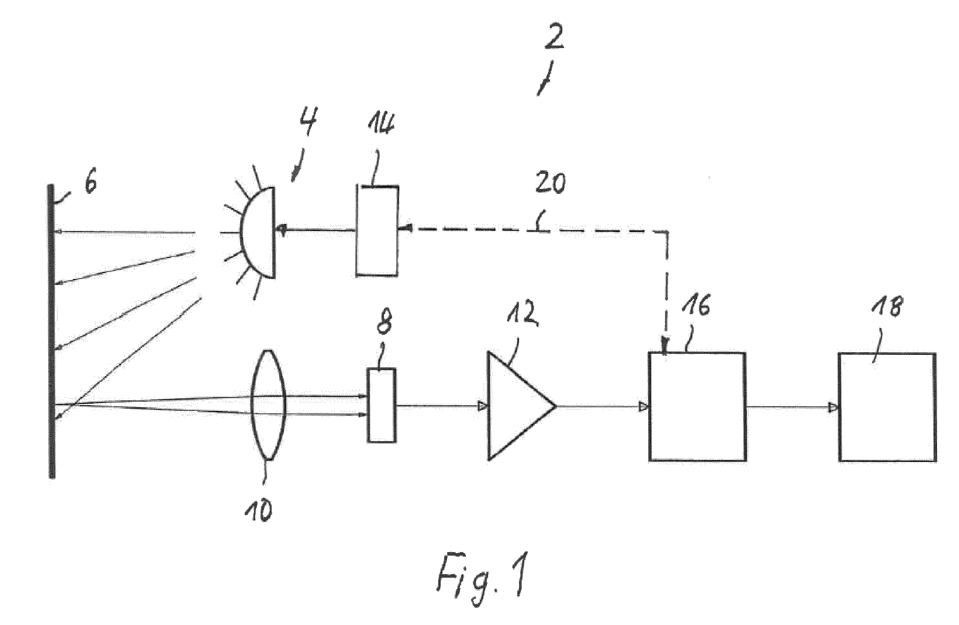

In Figure 1 a first exemplary embodiment of an inventive contactless dental device 2 for determining (ascertaining) of tooth colors is illustrated in a highly schematic and block-diagram-type manner, which inventive contactless dental device 2 is also referred to as "device" in the following for short. The "determining of a tooth color" is also inventively understood to include the determining of opalescences or other surface features of teeth which influence the color perception. The inventive device 2 is predominantly provided for determining tooth colors. It is also usable, however, for color-determination in other medical or technical fields, for example, on the skin or in other fields.

The device 2 has illuminating means for illuminating with ambient illumination light a tooth to be examined. The tooth to be examined is depicted in Figure 1 by a plane 6. If desirable or necessary according to the respective requirements, an optics apparatus for beam-forming the illumination light can be associated with the illuminating means 4.

The inventive device 2 further includes a color sensor 8 for the acquisition and spectral examination of the light reflected from the tooth. In this exemplary embodiment the color sensor is formed by a semiconductor color sensor 8 with which an observation optics apparatus 10 is associated which defines a measuring spot of the semiconductor color sensor 8 on the tooth 6 to be examined and thus a measuring point. The semiconductor color sensor 8 serves the capturing and spectral examination of the light reflected from the tooth 6.

Using the semiconductor color sensor 8, the light reflected from the tooth 6 is captured and spectrally examined, for example with respect to the primary colors red/green/blue. The semiconductor color sensor 8 can include any number of photodiodes in accordance with the respective requirements.

A signal-conditioning device 12 is disposed downstream of the semiconductor color sensor 8, wherein for example an amplification, optionally also noise reduction, of the output signal of the semiconductor cold sensor 8 can be carried out.

Filtering means for the at least partial separation of a signal component originating from the illumination light from a signal component originating from the ambient light are inventively associated with the color sensor, i.e. in the illustrated exemplary embodiment the semiconductor color sensor 8. Since in the context of the invention the signal components originating from the illumination light represent the useful signal to be evaluated, while signal components originating from the ambient light represent an interfering signal, the filtering means 16 thus serve for separating the useful signal from the interfering signal.

In the illustrated exemplary embodiment the illuminating means 4 are constructed and established for emitting of modulated illumination light. For this purpose modulation means are associated with the light source or the light sources of the illuminating means 4, which modulation means are implied schematically in Figure 1 by the reference number 14 and carry out an amplitude modulation of the illumination light in the illustrated exemplary embodiment.

In Figure 1 the filtering means are indicated by the reference number 16 and disposed downstream of the signal conditioning means 12 and thus of the semiconductor color sensor 8, so that the separation of the signal components (useful signal) originating from the illumination light from the signal components (interfering signal) originating from the ambient light occur at the signal-processing level. It is also inventively possible, however, to conduct the filtering for separating useful signal and interfering signal in another manner, for example in that the illuminating means emit in a spectral range which makes possible a separating of the useful- and interfering-signal via an optical filtering. For example, the photodiodes of the semiconductor color sensor 8 can be provided with optical filters so that they exclusively or predominantly respond to the spectral range of the illumination light, and in this manner the interfering influence of the ambient light is optically filtered-out.

In the illustrated exemplary embodiment the filtering means 16 have a high-pass whose cutoff frequency is chosen such that signal components originating from the modulated illumination light are allowed through. In the frequency range the high-pass thus effects a separation of the useful signal from the interfering signal.

The output signal of the filtering means 16 is supplied to the evaluating means, which determine the tooth color at the respective measuring point based on the output signal of the filtering means 16. As described above, the measuring point is defined by the measuring spot of the semiconductor color sensor 8, which for its part is defined by the observation optics apparatus 10.

How suitable dental materials can be chosen for the treatment of the tooth 6 based on the tooth color determined in this manner with reference to tooth color samples is generally known to the person skilled in the art and is this not further described here.

The invention thus makes possible the determination of tooth colors in a simple and reliable manner, contactless and under ambient light. If desired or necessary according to the respective requirements, the determining of the tooth color can be carried out successively on the same tooth at different points, in order to obtain information about the surface color gradient of the tooth 6.

In principle the measuring using the inventive device 2 can be carried out without synchronization between the modulation means 4 and the filtering means 16. However, if desired or necessary according to the respective requirements, a synchronization between the modulation means 14 and the filtering means 16 can also be carried out, as implied in Figure 1 by a dashed line 20.

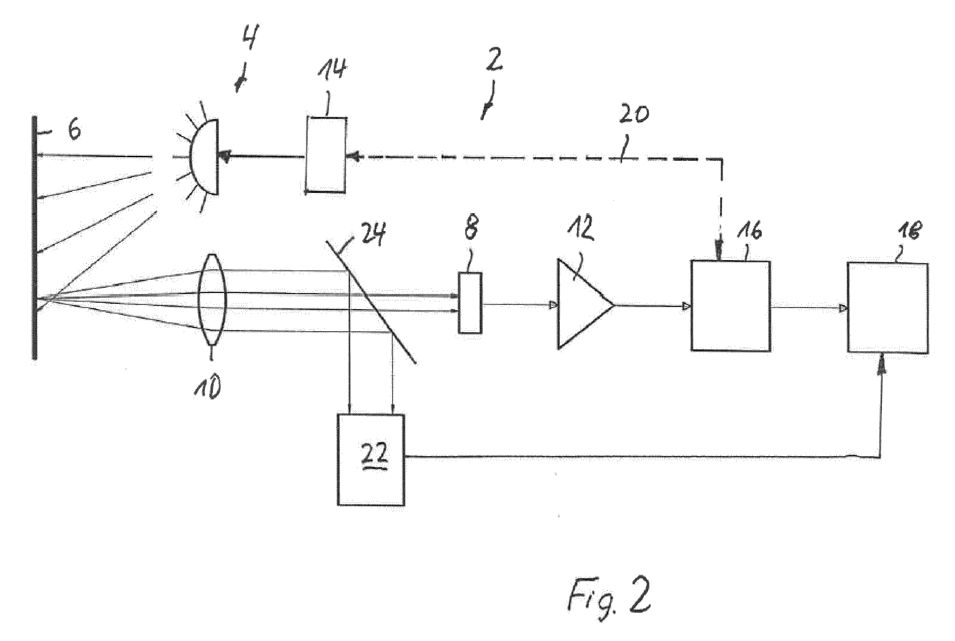

In Figure 2 a second exemplary embodiment of an inventive device 2 is illustrated which differentiates itself from the exemplary embodiment according to Figure 1 in that in addition to the semiconductor color sensor 8 a camera 22 is provided which is formed in this exemplary embodiment by a digital camera including a color image sensor. A beam splitter 24 is provided for decoupling of the image delivered from the observation optics apparatus 10 to the camera 22, which can be formed, for example, by a semitransparent mirror.

The camera 22 serves for capturing a color image of the tooth 6, wherein the illuminating means 4 are aligned or able to be aligned relative to the camera 22 such that preferably substantially punctiform measuring point illuminated by the illuminating means falls within the field of view of the camera 22. As described above, the measuring point is defined by the measuring spot of the semiconductor color sensor 8 and thus by the observing optics apparatus 10.

As implied in Figure 2 by a line 24, the camera is connected to the evaluating means 18 in a signal-transmitting manner for transmitting a color image of the tooth 6 to the evaluating means 18, which determine a surface color gradient of the tooth 6 based on the output signal for the measuring point and the surface color gradient in the color image captured by the camera. While the semiconductor color sensor 8 serves to obtain an absolute (in the context of the calibration of the semiconductor color sensor 8) color reference at the measuring point, the color image recorded by the camera 22 serves to determine the relative color values of the tooth at a distance from the measuring point starting from the absolute color reference at the measuring point, and thus overall a surface color gradient of the tooth 6. The exemplary embodiment according to Figure 2 thus makes it possible to determine the surface color gradient of a tooth with high reliability in a single measurement. Separate measurements at different points are thus unnecessary.

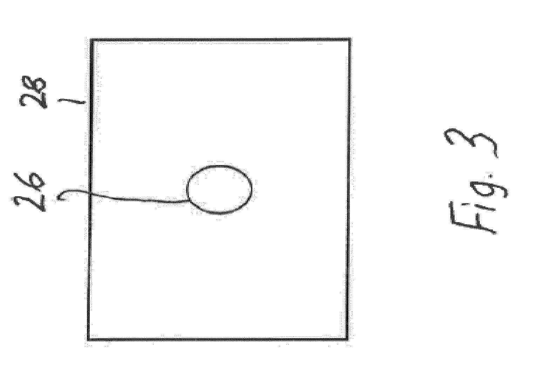

In Figure 3 it is schematically clarified that a measuring spot 26 of the semiconductor color sensor defined by the observation optics apparatus 10 falls within the field of view 28 acquired by the camera 22.

The components of the inventive device 2 are accommodated in a handheld and hand-guided housing in a manner known to the person skilled in the art, which housing is not illustrated in the drawing due to the schematized illustration. The manner in which the components of the device 2 are accommodated in the housing and powered by current, as well as the manner of the data transmission from the device 2, is generally known to the person skilled in the art and is thus not described in more detail here to the person skilled in the art.

In order to register and optionally compensate for effects of a temperature drift of the illuminating means 4, for example from the light diodes used, on the spectral composition of the illumination light, the inventive dental device 2 can include at least one temperature sensor associated with the illuminating means 4. Using the temperature sensor, the temperature of the light sources of the illuminating means 4 is then measured during the operation of the dental device 2, so a spectral shift of the illumination light can be determined using a previously known temperature-frequency characteristic curve and can be considered during the evaluating of the output signal of the color sensor 16 by the evaluating means 18.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A contactless dental device for determining tooth colors,
including illuminating means (4) for illuminating a tooth (6) to be examined using illumination light in ambient light,
including at least one color sensor (8) for capturing and spectral examination of the light reflected from the tooth (6), wherein filtering means (16) for at least a partial separation of a signal component originating from the illumination light from a signal component originating from the ambient light are associated with the color sensor (8), and
evaluation means, disposed downstream from the filtering means (16), for determining the tooth color based on the signal component originating from the illumination light.

2. The dental device according to Claim 1, **characterized in that** the illuminating means (14) is formed and established for emitting modulated illumination light.

3. The dental device according to any of the preceding claims, **characterized in that** the illuminating means (4) include at least one preferably white LED.

4. The dental device according to any of the preceding claims, **characterized in that** the color sensor (8) is a semiconductor sensor.

5. The dental device according to any of the preceding claims, **characterized in that** the filtering means has a high-pass whose cutoff frequency is chosen such that the signal components originating from the modulated illumination light are allowed to pass through.

6. The dental device according to any of the preceding claims, **characterized in that** the device includes a camera (22) for capturing a color image of the tooth (6), wherein the illumination device is adjusted or adjustable relative to the camera (22) such that a measuring point captured by the color sensor (8) falls within the field of view (28) of the camera (22).

7. The dental device according to Claim 6, **characterized in that** the camera (22) is connected to the evaluating means (18) in a signal-transmitting manner for transmitting a color image of the tooth (6) of the evaluating means (16), which determine a color gradient of the tooth (6) based on the output signal of the color sensor (8) as color reference and on the surface color gradient in the color image.

8. The dental device according to Claim 6 or 7, **characterized in that** a beam splitter is disposed in the beam path in front of the color sensor (8) for decoupling to the camera (22).

9. A contactless method for determining tooth colors, wherein a tooth to be examined is illuminated by illumination light in ambient light, wherein light reflected from the tooth is captured and spectrally examined using a color sensor,
wherein filtering means are associated with the sensor, by which a signal component originating from the illumination light is at least partially separated from a signal component originating from the ambient light, and
wherein the tooth color is determined in the evaluating means disposed downstream of the filtering means based on the signal component originating from the illumination light.

10. The method according to Claim 9, **characterized in that** the illumination light is modulated.

11. The method according to one of Claims 9 or 10, **characterized in that** at least one preferably white LED is used as illuminating means.

12. The method according to one of Claims 9 to 11, **characterized in that** the filtering means have a high-pass whose cutoff frequency is chosen such that signal components originating from the modulated illumination light are allowed to pass through.

13. The method according to one of Claims 9 to 12, **characterized in that** a camera for capturing a color image of the tooth is used wherein the illuminating device is aligned or able to be aligned relative to the camera such that a measuring point captured by the color sensor falls within the field of view of the camera.

14. The method according to Claim 13, **characterized in that** the camera is connected to the evaluation means in a signal-transmitting manner for transmitting a color image of the tooth to the evaluating means, wherein a color gradient of the tooth is determined by the evaluation means based on the output signal of the color sensor as color reference and on the surface color gradient in the color image.

15. The method according to Claim 13 or 14, **characterized in that** a beam splitter is disposed in the beam path in front of the color sensor for decoupling to the camera.
